# EUROPÄISCHE PATENTANMELDUNG

(11) **EP 1 544 086 A1**
(43) Veröffentlichungstag der Anmeldung: **22.06.2005**
(21) Anmeldenummer: 04030202.8
(22) Anmeldetag: 20.12.2004
(51) Int. Cl.: B62D 25/14, F16L 9/17

(54) **Einschaliger Instrumententafelträger**

(30) Priorität: 19.12.2003 DE 10359746
(71) Anmelder: Benteler Automobiltechnik GmbH, 33102 Paderborn (DE)
(72) Erfinder: Hövener, Jörg, 33158 Salzkotten (DE); Knaup, Hans-Jürgen, 33175 Bad Lippspringe (DE)

(57) **Zusammenfassung**

Beschrieben wird ein Montageträger 4 für eine Instrumententafel als Blechumformteil. Abweichend von der Schalenbauweise aus dem Stand der Technik wird der erfindungsgemäße Montageträger 4 einteilig aus einem Blech umgeformt und über nur eine Stoßkante 3 geschlossen. Dazu weist der Montageträger 4 eine einheitliche Biegelinie 2 auf. Diese liegt bevorzugt der Stoßkante 3 gegenüber.

## Beschreibung

Die Erfindung betrifft einen Montageträger für eine Instrumententafel als Blechumformteil mit einem geschlossenen Hohlprofil, das entlang seiner Längsachse L unterschiedliche Querschnitte aufweist, nach dem Oberbegriff von Anspruch 1.

Montageträger für eine Instrumententafel erstrecken sich bei einem Personenkraftwagen im Bereich zwischen den A-Säulen quer zur Fahrtrichtung hinter der Instrumententafel. Der Montageträger besteht aus einem Tragprofil, das in herkömmlicher Weise als Rohr, als Druckgussteil oder als Blechumformteil ausgebildet ist. An dem Tragprofil werden diverse Halterungen angeordnet, die zur Befestigung weiterer Fahrzeugkomponenten wie Lenksäule, Mittelkonsole, Airbag, Sicherungskasten, Handschuhfach usw. dienen. Die DE 299 16 470 U1 offenbart beispielsweise ein Tragprofil, das aus zwei miteinander verbundenen Metallschalen hergestellt ist. Ein solchermaßen geschlossenes Profil besitzt hohe axiale wie polare Flächenträgheitsmomente mit entsprechend hoher Biege- und Torsionssteifigkeit, wodurch angreifende Querkräfte problemlos aufgenommen werden können. Hierdurch können Metallschalen geringer Wanddicke zum Einsatz kommen. Das Design hat sich somit in der Praxis bewährt. Allerdings müssen die Schalen einzeln hergestellt und über mindestens zwei Schweißnähte miteinander verbunden werden, was einen relativ hohen und teuren Fügeaufwand bedingt. Häufig ist der Montageträger auch aus zwei Halbschalen auf der Fahrerseite und weiteren zwei Halbschalen auf der Beifahrerseite aufgebaut, was den Fügeaufwand weiter steigert.

Aufgabe der Erfindung ist es daher, eine Blechumformteillösung aufzuzeigen, bei der der Fügeaufwand reduziert ist.

Erfindungsgemäß wird diese Aufgabe mit den kennzeichnenden Merkmalen des Anspruchs 1 gelöst. Demnach wird mittels Gesenkbiegen ein geschlossenes Kastenprofil erzeugt, das entlang nur einer Stoßkante gefügt ist. Dadurch reduzieren sich die Teileanzahl, die Fügeoperationen und der Herstellungsaufwand auf ein Minimum. Laut dem Handbuch für Umformtechnik von Kurt Lange, Band 3, zweite Auflage 1990 im Springer-Verlag, Kapitel 6.3.2 ist das Gesenkbiegen ein Biegen zwischen Biegestempel und Biegegesenk bis zur Anlage des Werkstücks im Gesenk. Dabei kann das Gesenkbiegen auch mit Gesenkdrücken im gleichen Arbeitsgang kombiniert werden. Im Folgenden wird für beide Formvorgänge einheitlich der Begriff Gesenkbiegen verwendet. Entscheidend für die einfache Herstellung des erfindungsgemäßen Montageträgers ist, dass er über seine Längserstreckung L eine einheitliche Biegekante besitzt, so dass er in einem Zug aus einer zugeschnittenen Platine in seine Grundform vorgebogen werden kann. Danach fährt der Stempel aus dem vorgebogenen, aber noch geöffneten Blechprofil aus. Anschließend wird das Profil von außen in die Endform gedrückt und entlang der einzigen Stoßkante beispielsweise mittels Spannringen zusammengehalten und zu einem geschlossenen Kastenprofil gefügt. Bevorzugt liegt die Biegekante der Stoßkante gegenüber, da dadurch die Endformgebung des Profils von außen erleichtert wird.

Auf diese Weise ist die Herstellung eines Montageträgers deutlich vereinfacht, da die Teileanzahl und die Anzahl der Fügeoperationen auf ein Minimum reduziert wird. Gleichzeitig bleibt die Profilvielfalt erhalten. Denn häufig ist der Montageträger auf der Fahrerseite höheren Belastungen ausgesetzt und daher stärker ausgebildet als auf der Beifahrerseite. Außerdem kann die Anbindung und Integration unterschiedlicher Anbindemodule und Bordsysteme wie beispielsweise die Integration der Klimaanlage zu einem unterschiedlichen Querschnitt des Montageträgers auf Fahrer- und Beifahrerseite führen. Anders als beispielsweise beim Walzprofilieren kann mit dem Gesenkbiegen aber auch ein variierender Querschnittsverlauf des Montageträgers einfach hergestellt werden, solange die einheitliche Biegekante vorhanden ist. Die Erfindung trägt daher durch die mögliche Formenvielfalt den speziellen Anforderungen an das Design eines Montageträgers Rechnung.

Allerdings kann das Einhalten der erforderlichen Toleranzen gegenüber der zwei- oder Mehrschalenlösung aus dem Stand der Technik schwieriger sein. Daher wird vorgeschlagen die notwendigen Montagelöcher nach dem Vorprägen der Biegelinie einzubringen oder aus dem endgeformten Montageträger mittels Laser auszuschneiden. Als Alternative dazu können bei einer späteren reinen Schweißanbindung der Halter vorgeprägte Stanzmuttern entfallen. Mit diesen Vorschlägen ist das Einhalten der Toleranzen sichergestellt.

Nachfolgend ist die Erfindung anhand der Figuren genauer beschrieben. Dabei zeigen
Figur 1 einen Querschnitt eines erfindungsgemäßen Montageträgerprofils 1,
Figur 2 einen erfindungsgemäßen Montageträger 4 von der Seite und
Figur 3 den Montageträger 4 in einer perspektivischen Darstellung.

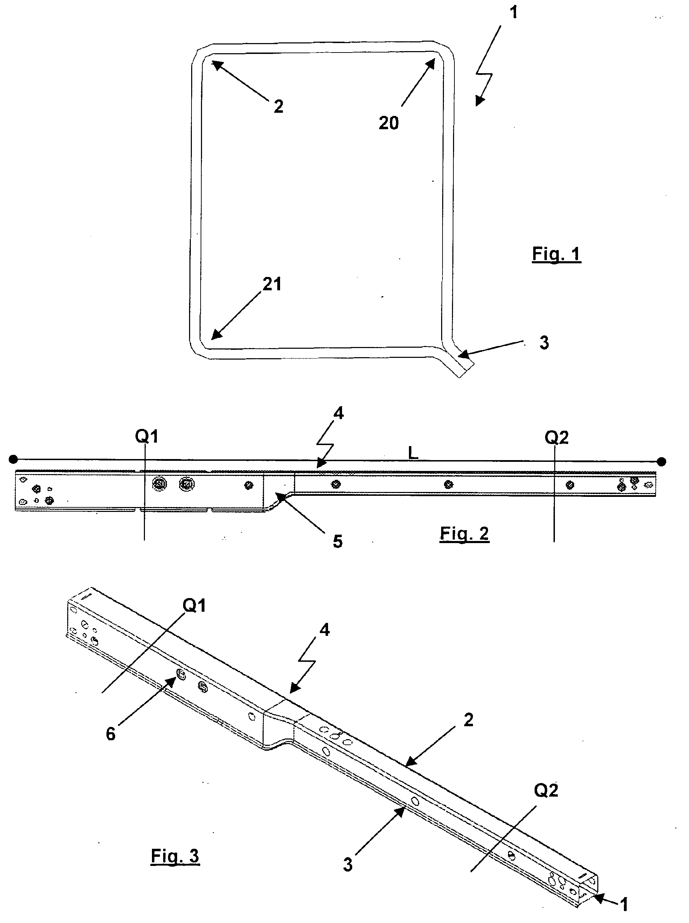

Figur 1 zeigt das geschlossene Kastenprofil 1 eines erfindungsgemäßen Montageträgers im Querschnitt. Die Biegekante 2 befindet sich gegenüber der Stoßkante 3. Die Ausgangsplatine wurde entlang der Biegekante 2 vorgebogen. Anschließend konnte der Biegestempel aus dem noch geöffneten Profil 1 ausfahren. Sodann wurde das Profil 1 von außen zusammengedrückt oder kalibriert, so dass sich die Ecken 20 und 21 ausgebildet haben. Danach ist das Profil 1 an der Stoßkante 3 zusammengehalten und beispielsweise mittels einer Schweißnaht gefügt worden. In dieser bevorzugten Ausführungsform ist das Profil 1 annähernd rechtwinklig ausgestaltet. Damit lassen sich die guten Betriebseigenschaften der Mehrschalenlösung aus dem Stand der Technik einstellen.

Figur 2 zeigt, dass der Montageträger 4 über einen größeren Querschnitt Q1 auf der Fahrerseite und einen kleineren Querschnitt Q2 auf der Beifahrerseite verfügt, die anhand der entsprechenden Belastung jeweils ausgelegt sind. Die Biegelinie verläuft einheitlich entlang der Längserstreckung L des Montageträgers 4. Durch diese Konfiguration wird ein durchgängiges Tragprofil 4 geschaffen, das keine seine Steifigkeit beeinträchtigenden Öffnungen, abgesehen von Montagelöchern, aufweist. Außerdem ist der Übergang 5 von der Fahrer- zur Beifahrerseite, also vom größeren Querschnitt Q1 zum kleineren Querschnitt Q2 ohne schwächende Fügenaht realisiert. Das Profil 4 ist auch im Übergangsbereich 5 geschlossen.

In Figur 3 sind die durchgehende Biegelinie 2 und das geschlossene Hohlprofil 1 des Montageträgers 4 deutlich zu erkennen. Der Biegelinie 2 in etwa gegenüber liegt die Stoßkante 3, die gleichzeitig die Fügenaht bildet. Die in dieser Figur angedeuteten Stanzmuttern 6 sind nach dem Vorformen der Biegelinie 2 eingebracht worden, um die erforderlichen Toleranzen einzuhalten.

## Patentansprüche

1. Montageträger 4 für eine Instrumententafel als Blechumformteil mit einem geschlossenen Hohlprofil 1,
**dadurch gekennzeichnet,**
**dass** der Montageträger 4 einteilig aus einer Platine mittels Gesenkbiegen entlang einer Biegekante 2 gebogen und entlang nur einer Stoßkante 3 zu einem geschlossenen Kastenprofil 1 gefügt ist.

2. Montageträger 4 nach Anspruch 1,
**dadurch gekennzeichnet,**
**dass** er entlang seiner Längsachse L unterschiedliche Querschnitte Q1 und Q2 aufweist.

3. Montageträger 4 nach einem der vorhergehenden Ansprüche,
**dadurch gekennzeichnet,**
**dass** er einen rechtwinkligen Querschnitt Q1, Q2 aufweist.

4. Verfahren zum Herstellen eines Montageträgers 4 nach Anspruch 1,
**dadurch gekennzeichnet,**
**dass** in eine zugeschnittene Platine mittels mindestens eines Biegestempels die Kontur des Montageträgers 4 entlang einer Biegekante 2 vorgeformt wird, wobei das Querschnittsprofil Q1, Q2 des Montageträgers 4 noch geöffnet bleibt, so dass der Biegestempel nach dem Vorformen aus dem Profil 1 wieder ausfahren kann, dass das vorgeformte Profil 1 anschließend von außen kalibriert, zusammengedrückt und entlang der Stoßkante 3 verschweißt wird.
